# EUROPEAN PATENT APPLICATION

(11) **EP 4 600 869 A2**
(43) Date of publication of application: **13.08.2025**
(21) Application number: 25179493.9
(22) Date of filing: 28.05.2025
(51) Int. Cl.: G06N 3/0495, G06N 3/063

(54) **FEATURE DATA PROCESSING METHOD AND APPARATUS, MEDIUM, AND DEVICE**

(30) Priority: 30.05.2024 CN 202410695175
(71) Applicant: Shanghai Horizon Intelligent Automotive Technology Co., Ltd., Shanghai Jiading District 201800 (CN)
(72) Inventor: LIU, Qiang, Shanghai, 201800 (CN)
(74) Representative: v. Bezold & Partner Patentanwälte - PartG mbB

(57) **Abstract**

Embodiments of this disclosure disclose a feature data processing method and apparatus, a medium, and a device. The method includes: determining first data format information of a first tensor corresponding to to-be-processed feature data and second data format information of a second tensor; determining a first tensor computation unit from a neural network processor based on the first data format information and the second data format information; controlling the first tensor computation unit to compute the first tensor and the second tensor to obtain a tensor computation result; and determining a processing result corresponding to the to-be-processed feature data based on the tensor computation result. According to the embodiments of this disclosure, a configurable capability of a basic computation unit of the neural network processor can be achieved, thereby implementing tensor operations with different mixed accuracy or higher accuracy based on the basic computation unit in the neural network processor.

## Description

### FIELD OF THE INVENTION

This disclosure relates to computer technologies, and in particular, to a feature data processing method and apparatus, a medium, and a device.

### BACKGROUND OF THE INVENTION

In application fields of assisted driving and intelligent cockpit, large-scale neural network models face significant challenges when deployed on a terminal side. Due to a large scale of model parameters, there is a huge demand for weight parameter memory access and computation when deploying a large model on the terminal side. To resolve this problem, generally a parameter scale is reduced by quantifying the model, so as to accelerate an inference process of the model by performing tensor computation on feature data on the terminal side by using a neural network processor. In related technologies, the neural network processor typically only supports tensor multiplication with symmetric data formats (or bit widths), such as multiplication of int4 tensors. However, during model quantization, low-bit quantization needs to be performed on both the feature data and weight data, so as to perform a tensor multiplication operation with symmetric data formats, which can easily reduce model accuracy.

### SUMMARY OF THE INVENTION

To resolve the foregoing technical problem, embodiments of this disclosure provide a feature data processing method and apparatus, a medium, and a device, which can achieve asymmetric tensor multiplication, thereby ensuring model accuracy.

According to a first aspect of this disclosure, a feature data processing method is provided, including: determining first data format information of a first tensor corresponding to to-be-processed feature data and second data format information of a second tensor, where the first data format information includes a first bit width of the first tensor and the second data format information includes a second bit width of the second tensor; determining a first tensor computation unit from a neural network processor based on the first data format information and the second data format information, where the first tensor computation unit includes at least one basic computation unit that supports tensor computation with a preset bit width; controlling the first tensor computation unit to compute the first tensor and the second tensor to obtain a tensor computation result; and determining a processing result corresponding to the to-be-processed feature data based on the tensor computation result.

According to a second aspect of this disclosure, a feature data processing apparatus is provided, including: a first processing module, configured to determine first data format information of a first tensor corresponding to to-be-processed feature data and second data format information of a second tensor, where the first data format information includes a first bit width of the first tensor and the second data format information includes a second bit width of the second tensor; a second processing module, configured to determine a first tensor computation unit from a neural network processor based on the first data format information and the second data format information, where the first tensor computation unit includes at least one basic computation unit that supports tensor computation with a preset bit width; a first control module, configured to control the first tensor computation unit to compute the first tensor and the second tensor to obtain a tensor computation result; and a second control module, configured to determine a processing result corresponding to the to-be-processed feature data based on the tensor computation result.

According to a third aspect of this disclosure, a computer readable storage medium is provided. The storage medium stores a computer program, and the computer program is used for implementing the feature data processing method according to any one of the foregoing embodiments of this disclosure.

According to a fourth aspect of this disclosure, an electronic device is provided. The electronic device includes: a processor; and a memory configured to store processor-executable instructions. The processor is configured to read the executable instructions from the memory, and execute the instructions to implement the feature data processing method according to any one of the foregoing embodiments of this disclosure.

According to a fifth aspect of this disclosure, a computer program product is provided. When instructions in the computer program product are executed by a processor, the feature data processing method according to any one of the foregoing embodiments of this disclosure is implemented.

Based on the feature data processing method and apparatus, the medium, and the device that are provided in the foregoing embodiments of this disclosure, for the first tensor of the first data format and the second tensor of the second data format, regardless of whether the first data format and the second data format are symmetrical (that is, identical), the tensor computation module (referred to as the first tensor computation unit) that can complete computation of the first tensor and the second tensor can be determined by using the basic computation unit in the neural network processor that supports the tensor computation with the preset bit width. In this case, a configurable capability of the computation unit in the neural network processor is achieved, so that tensor operations with different mixed accuracy or higher accuracy can be implemented based on the basic computation unit in the neural network processor. In this case, during model quantization, a high-bit quantization result, such as high-bit quantization of the feature data, can be maintained, so that computational accuracy of the neural network model can be effectively ensured. Moreover, through configurability of the neural network processor, the neural network processor is enabled to satisfy computational requirements for deploying models of various scales on an edge side, thereby improving universality of the neural network processor.

### BRIEF DESCRIPTION OF THE DRAWINGS

FIG. 1 shows an exemplary application scenario of a feature data processing method according to this disclosure;
FIG. 2 is a schematic flowchart of a feature data processing method according to an exemplary embodiment of this disclosure;
FIG. 3 is a schematic flowchart of a feature data processing method according to another exemplary embodiment of this disclosure;
FIG. 4 is a schematic flowchart of a feature data processing method according to still another exemplary embodiment of this disclosure;
FIG. 5 is a schematic flowchart of a feature data processing method according to yet another exemplary embodiment of this disclosure;
FIG. 6 is a block diagram of a structure of a neural network processor according to an exemplary embodiment of this disclosure;
FIG. 7 is a block diagram of a processing flow of a neural network processor according to an exemplary embodiment of this disclosure;
FIG. 8 is a block diagram of a flow of processing feature data according to an exemplary embodiment of this disclosure;
FIG. 9 is a schematic diagram of configurable mixed types of a first tensor and a second tensor according to an exemplary embodiment of this disclosure;
FIG. 10 is a schematic diagram of configurable mixed types of a first tensor and a second tensor according to another exemplary embodiment of this disclosure;
FIG. 11 is a schematic diagram of configurable mixed types of a first tensor and a second tensor according to still another exemplary embodiment of this disclosure;
FIG. 12 is a schematic diagram of a structure of a feature data processing apparatus according to an exemplary embodiment of this disclosure;
FIG. 13 is a schematic diagram of a structure of a feature data processing apparatus according to another exemplary embodiment of this disclosure;
FIG. 14 is a schematic diagram of a structure of a feature data processing apparatus according to still another exemplary embodiment of this disclosure; and
FIG. 15 is a diagram of a structure of an electronic device according to an embodiment of this disclosure.

### DETAILED DESCRIPTION OF THE EMBODIMENTS

To explain this disclosure, exemplary embodiments of this disclosure are described below in detail with reference to accompanying drawings. Obviously, the embodiments described are merely some, rather than all of embodiments of this disclosure. It should be understood that this disclosure is not limited to the exemplary embodiments.

It should be noted that unless otherwise specified, the scope of this disclosure is not limited by relative arrangement, numeric expressions, and numerical values of components and steps described in these embodiments.

### Overview of this disclosure

In a process of implementing this disclosure, the inventor finds that an existing neural network processor typically only supports tensor multiplication with symmetric data formats (or bit widths), such as multiplication of int4 tensors. However, during model quantization, low-bit quantization needs to be performed on both feature data and weight data to implement symmetric tensor multiplication, which facilitates inference acceleration of a model by using the neural network processor. For example, in a matrix computation unit in the neural network processor, bit widths of a weight and an activation value (that is, a feature value) are both designed to be 8 bits, being merely applicable to computation of int8 matrixes, while not applicable to matrix computation with larger bit widths or with different bit widths. Therefore, when accelerating model inference by using the neural network processor, it is needed to quantify the activation value and the weight of the neural network model to an int8 data format. However, the activation value of the neural network model usually requires a higher dynamic range to cover a wider range of scenarios. For example, the activation value uses an int16 data format, which may ensure a high dynamic range of the activation value. If low-bit quantization is performed on both the activation value and the weight, model accuracy is easily reduced.

### Exemplary overview

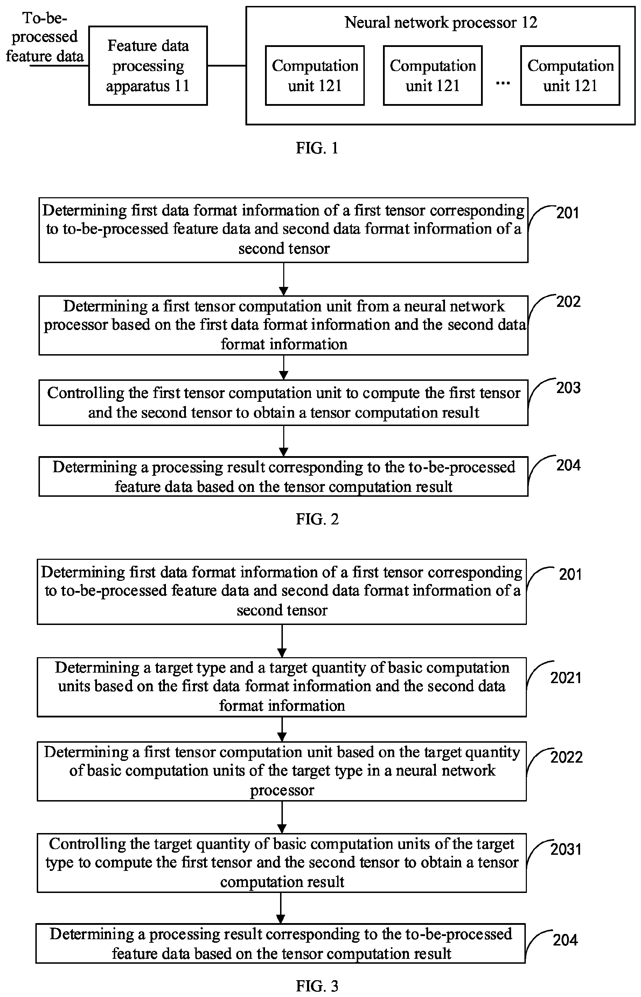

FIG. 1 shows an exemplary application scenario of a feature data processing method according to this disclosure. As shown in FIG. 1, in a scenario of processing feature data, regarding to-be-processed feature data, first data format information of a first tensor corresponding to the to-be-processed feature data and second data format information of a second tensor may be determined by using the feature data processing method in this disclosure (which is implemented in a feature data processing apparatus 11 in this disclosure), wherein the first data format information may include a first bit width of the first tensor and the second data format information may include a second bit width of the second tensor. Further, a first tensor computation unit may be determined from a neural network processor 12 based on the first data format information and the second data format information. The first tensor computation unit may be composed of one or more computation units (which may be referred to as basic computation units) 121 in the neural network processor 12, for performing tensor operations on the first tensor and the second tensor. The basic computation unit 121 supports tensor computation with a preset bit width. Thus, the first tensor computation unit may be controlled to compute the first tensor and the second tensor to obtain a tensor computation result, so as to determine a processing result corresponding to the to-be-processed feature data based on the tensor computation result. A configurable capability of the computation unit 121 of the neural network processor 12 is implemented because the first tensor computation unit that can satisfy computational requirements of the first tensor and the second tensor may be configured based on the data format information of the first tensor and the second tensor by using one or more basic computation units 121. Regardless of whether the first data format information and the second data format information are identical, tensor computation may be implemented by using the basic computation unit of the neural network processor 12. To be specific, tensor operations with different mixed accuracy or higher accuracy can be implemented according to this disclosure. In this case, during model quantization, a high-bit quantization result of the feature data may be maintained, so that computational accuracy of the neural network model can be effectively ensured. Moreover, due to the configurable computation unit 121 of the neural network processor 12, computational requirements for deploying models of various scales, such as an LLM large model and a medium-sized model in autonomous driving, on an edge side can be satisfied, thereby effectively improving universality of the neural network processor. The feature data processing apparatus 11 may be disposed in the neural network processor 12. For example, a main controller of the neural network processor 12 is the feature data processing apparatus 11. The apparatus 11 may also be independent of the neural network processor 12, and may control the basic computation unit through communication with the neural network processor 12 (as shown in FIG. 1). For example, the apparatus 11 may be disposed in a processor (CPU) or a microcontroller (MCU), which is not specifically limited.

### Exemplary method

FIG. 2 is a schematic flowchart of a feature data processing method according to an exemplary embodiment of this disclosure. This embodiment may be applicable to an electronic device, such as an in-vehicle computing platform. As shown in FIG. 2, the method is this embodiment of this disclosure may include the following steps.

Step 201: Determining first data format information of a first tensor corresponding to to-be-processed feature data and second data format information of a second tensor.

The first data format information may include a first bit width of the first tensor. The second data format information may include a second bit width of the second tensor. The to-be-processed feature data may be feature data output from any network layer during inference and other processes of a neural network model, and is input to a next network layer. For example, feature data output from an activation function layer is used for computation of a subsequent layer. This is not specifically limited. The first tensor and the second tensor may respectively correspond to two pieces of feature data in the to-be-processed feature data, or may correspond to the to-be-processed feature data and corresponding weight data, which may be specifically determined based on an operation type corresponding to the to-be-processed feature data. The operation type may include a convolution operation, a matrix multiplication operation, a matrix addition operation, and the like. For example, if the convolution operation is an operation between the to-be-processed feature data and pre-obtained weight data (that is, a convolution kernel), two to-be-computed tensors (the first tensor and the second tensor) may be obtained based on the to-be-processed feature data and the weight data. A matrix multiplication of the two pieces of feature data is an operation between the two tensors.

In some optional embodiments, the first data format information may also include a first data type of the first tensor, and the second data format information may also include a second data type of the second tensor. The data type may include, for example, an integer (int) type or a floating-point (fp) type. The bit widths may include 2 bits, 4 bits, 8 bits, 12 bits, 16 bits, and 32 bits. The first data format information may be different from the second data format information. For example, the first data format information is of int4 while the second data format information is of int8. Certainly, the method in the embodiments of this disclosure may also be applicable to a case where the first data format information is same as the second data format information. For example, both the first data format information and the second data format information are of int8.

In some optional embodiments, dimensions of the first tensor and the second tensor may be one-dimensional, two-dimensional, or three-dimensional, where a vector may be used as a one-dimensional tensor and a matrix may be used as a two-dimensional tensor.

Step 202: Determining a first tensor computation unit from a neural network processor based on the first data format information and the second data format information.

The first tensor computation unit may include at least one basic computation unit, which may support tensor computation with a preset bit width. The preset bit width may include bit widths respectively corresponding to the two to-be-computed tensors. For example, the preset bit width may include a first preset bit width corresponding to one input tensor of the basic computation unit and a second preset bit width corresponding to another input tensor. In this disclosure, the basic computation unit may be a matrix computation unit in the neural network processor. Matrix computation units with different precision levels perform matrix multiplication operations for data with different precision levels. For any basic computation unit, the first preset bit width and the second preset bit width that correspond to that basic computation unit may be same or different, which is specifically determined based on an actual situation of the basic computation unit. In other words, the basic computation unit supports tensor computation for the input tensor with the first preset bit width and the input tensor with the second preset bit width. The first tensor computation unit is composed of at least one basic computation unit to support computation between the first tensor and the second tensor. For example, if a matrix multiplication operation needs to be performed on the first tensor and the second tensor, the first tensor computation unit is a matrix multiplication computation module composed of at least one basic computation unit. The basic computation unit may be implemented, for example, by using a multiply-accumulate array.

In some optional embodiments, the neural network processor may include a plurality of basic computation units. The plurality of basic computation units may include a computation unit that supports tensor computation with symmetric formats (that is, computation between tensors of same accuracy, which may be referred as symmetric tensor computation for short), and a computation unit that supports tensor computation with asymmetric formats (that is, computation between tensors of mixed accuracy, which may be referred as asymmetric tensor computation for short).

In some optional embodiments, two input tensors of the basic computation unit that supports the tensor computation with symmetric formats have a same bit width and a same data type. For example, both the two input tensors of the basic computation unit are of int4. In this case, the first tensor computation unit may be composed of one or more basic computation units that satisfy requirements of the data type, for computing the first tensor and the second tensor. For example, if the basic computation unit is a computation unit that supports symmetric tensor computation of int4 * int4, the first tensor is of int4, and the second tensor is of int8, two basic computation units that support the symmetric tensor computation of int4 * int4 may be connected in series to form the first tensor computation unit to complete computation between the first tensor of in4 and the second tensor of int8, thereby implementing tensor computation with different mixed accuracy based on the basic computation units of the neural network processor.

In some optional embodiments, at least one of bit widths and data types of two input tensors in the basic computation unit that supports the tensor computation with asymmetric formats may be different. For example, in the basic computation unit, one input tensor is of int4 while the other input tensor is of int8. Alternatively, one input tensor is of int4 while the other input tensor is of fp4. In this case, the first tensor computation unit may be composed of one or more basic computation units that satisfy requirements of the data type, for computing the first tensor and the second tensor. For example, if the basic computation unit is a computation unit that supports asymmetric tensor computation of int4 * int8, the first tensor is of int4, and the second tensor is of int8, one basic computation unit that supports the asymmetric tensor computation of int4 * int8 may be used as the first tensor computation unit to complete computation between the first tensor of in4 and the second tensor of int8, thereby implementing tensor computation with different mixed accuracy based on the basic computation units of the neural network processor.

In some optional embodiments, data formats of the first tensor and the second tensor may be same, but bit widths of the first tensor and the second tensor are greater than the preset bit width supported by the basic computation unit. Therefore, tensor operation with higher accuracy can be implemented by using the basic computation unit with lower accuracy in the neural network processor. For example, if the basic computation unit supports tensor computation of int4, and the data formats of both the first tensor and the second tensor are int8, the computation of the first tensor and the second tensor may be completed by using four int4 * int4 basic computation units. In this case, tensor computation with higher accuracy is implemented based on the basic computation units with lower accuracy, and a plurality types of tensor computation with higher accuracy can be implemented based on a determined hardware computation unit.

In some optional embodiments, the plurality of basic computation units may include one or more pre-configured symmetric tensor computation units that support symmetric tensor computation, and one or more asymmetric tensor computation units that support asymmetric tensor computation. For example, the plurality of basic computation units include a pre-configured basic computation unit that supports computation for tensors of int4 and int8, a pre-configured basic computation unit that supports computation for tensors of int8 and int16, and a pre-configured basic computation unit that supports computation for tensors of int8 and int8. In this case, based on the first data format information and the second data format information, a basic tensor computation unit that satisfies computational requirements of the first tensor and the second tensor may be determined from the plurality of basic computation units of the neural network processor, to serve as the first tensor computation unit. Thus, tensor computation with different mixed accuracy or higher accuracy may be implemented by using the plurality of basic computation units.

Step 203: Controlling the first tensor computation unit to compute the first tensor and the second tensor to obtain a tensor computation result.

After the first tensor computation unit is determined, the first tensor computation unit may be controlled, according to a control manner corresponding to the first tensor computation unit, to compute the first and second tensors to obtain the tensor computation result. For example, the tensor computation result is a matrix multiplication result D=A * B of a matrix A of int4 and a matrix B of int8, and a bit width of D may be 12 bits.

Step 204: Determining a processing result corresponding to the to-be-processed feature data based on the tensor computation result.

After being obtained, the tensor computation result may be used as the processing result corresponding to the to-be-processed feature data. Post-processing may also be performed on the tensor computation result to obtain the processing result corresponding to the to-be-processed feature data, which may be specifically determined based on computational requirements for the to-be-processed feature data. The post-processing may include vector computation or other related computation. For example, the post-processing may include performing a softmax operation, a vector addition operation, a vector multiplication operation, or a vector logic operation on the tensor computation result.

According to the feature data processing method provided in the embodiments, for the first tensor of the first data format and the second tensor of the second data format, regardless of whether the first data format and the second data format are symmetrical (that is, identical), the tensor computation module (referred to as the first tensor computation unit) that can complete the computation of the first tensor and the second tensor can be determined by using the basic computation unit in the neural network processor that supports the tensor computation with the preset bit width. In this case, a configurable capability of the computation unit in the neural network processor is achieved, so that tensor operations with different mixed accuracy or higher accuracy can be implemented based on the basic computation unit in the neural network processor. In this case, during model quantization, a high-bit quantization result, such as high-bit quantization of the feature data, can be maintained, so that computational accuracy of the neural network model can be effectively ensured. Moreover, through a configurable capability of the neural network processor, the neural network processor is enabled to satisfy computational requirements for deploying models of various scales on an edge side, thereby improving universality of the neural network processor.

In some optional embodiments, the first tensor is first feature data in the to-be-processed feature data, and the second tensor is weight data corresponding to the first feature data.

For a case where the weight data and the to-be-processed feature data need to be computed, the first feature data and the weight data corresponding to the first feature data may be determined based on the to-be-processed feature data. There may be one or more pieces of first feature data. In other words, the first feature data may be all or part of data in the to-be-processed feature data. For a case where the to-be-processed feature data may be split into blocks for computation, the to-be-processed feature data may be split into a plurality of data blocks to improve processing efficiency through parallel processing or pipeline processing by using the plurality of data blocks. Each data block may determine one piece of first feature data. For example, for a dot product operation or a matrix multiplication operation for the feature data and the weight data, the to-be-processed feature data may be split into blocks for computation, and then block-wise computation results may be fused and post-processed, so as to obtain a computation result of the to-be-processed feature data. The weight data corresponding to the first feature data may be determined based on an association relationship between the first feature data and the to-be-processed feature data and a relationship between the to-be-processed feature data and the weight data.

After the first feature data and the weight data corresponding to the first feature data are determined, the first feature data may be determined as the second tensor, and the weight data corresponding to the first feature data may be determined as the first tensor. For example, the weight data is an array of M * N, and the first feature data is a feature map of N * L. The feature map of N * L is determined as the second tensor (which is a second matrix herein), and the weight array of M * N is determined as the first tensor (which is a first matrix herein), so as to compute a tensor for which a matrix multiplication result of the first tensor and the second tensor is M * L. Further, the first data format information of the first tensor is determined based on a first bit width and a first data type of the weight data, and the second data format information of the second tensor is determined based on a second bit width and a second data type of the first feature data. For the first bit width, the first data type, the second bit width, and the second data type, reference may be made to the foregoing content. The first bit width and the first data type may be formed into the first data format information according to a preset format, and the second bit width and the second data type may be formed into the second data format information according to a preset format. For example, the preset format is data type+bit width, such as int4 or fp8.

In some optional embodiments, data format information of the weight data may be directly obtained to serve as the first data format information of the first tensor. The data format information of the first feature data is obtained to serve as the second data format information of the second tensor.

In the embodiments, in cases such as a convolution operation where the to-be-processed feature data needs to be computed through pre-configured weight data, the configurable capability of the neural network processor in the embodiments of this disclosure may be used to implement tensor computation with mixed accuracy or higher accuracy for different data accuracy of the to-be-processed feature data and the weight data. This helps to maintain low-bit quantization of the weight data, reduce memory access and computational requirements of a weight, and maintain high-bit quantization of the feature data, thereby ensuring accuracy of the feature data and improving overall computational accuracy of the model.

In some optional embodiments, the first tensor is first feature data in the to-be-processed feature data, and the second tensor is second feature data in the to-be-processed feature data.

For computation between feature data, the to-be-processed feature data may include two sets of to-be-computed feature data. The first feature data and the second feature data may be determined based on the two sets of feature data. The first feature data is determined as the first tensor, and the second feature data is determined as the second tensor. The first data format information of the first tensor is determined based on a first bit width and a first data type of the first feature data, and the second data format information of the second tensor is determined based on a second bit width and a second data type of the second feature data.

In some optional embodiments, at least one pair of first feature data and second feature data may be determined based on the to-be-processed feature data. A principle of determining a plurality pairs of first feature data and second feature data is similar to that of determining the first feature data and the weight data in the foregoing embodiments.

In the embodiments, when it is needed to compute between two pieces of feature data, the configurable capability of the neural network processor in the embodiments of this disclosure may be used to implement tensor computation with mixed accuracy or higher accuracy for the two pieces of feature data with higher accuracy or mixed accuracy. This may ensure a high dynamic range of the feature data, thereby ensuring accuracy of the feature data and improving overall computational accuracy of the model.

FIG. 3 is a schematic flowchart of a feature data processing method according to another exemplary embodiment of this disclosure.

In some optional embodiments, as shown in FIG. 3, on the basis of the embodiments shown in FIG. 2, step 202 of determining a first tensor computation unit from a neural network processor based on the first data format information and the second data format may include the following steps.

Step 2021: Determining a target type and a target quantity of basic computation units based on the first data format information and the second data format information.

The basic computation unit is a computation unit in the neural network processor that supports tensor computation with the preset bit width. The preset bit width may include bit widths respectively corresponding to two input tensors of the basic computation unit, such as 4 bits * 4 bits and 8 bits * 8 bits. For the basic computation unit that supports symmetric tensor computation, the preset bit width may be represented by using one bit width. For example, a basic computation unit that supports int4 is a basic computation unit that supports tensor computation of int4 * in4.

In some optional embodiments, a type of the basic computation unit may be determined based on different preset bit widths and different data types. For example, if the neural network processor may include a plurality of basic computation units with different preset bit widths, each preset bit width corresponds to one type. For another example, if the neural network processor may include basic computation units that support different data types, each data type corresponds to one type of basic computation unit. For example, the neural network processor includes a plurality of int4 * int4 basic computation units and a plurality of fp4 * fp4 basic computation units.

In some optional embodiments, the target type and the target quantity of the basic computation units that satisfy requirements of current computation may be determined based on the first bit width and the first data type in the first data format information, the second bit width and the second data type in the second data format information, and the data type and the preset bit width supported by the basic computation unit.

In some optional embodiments, the target type may include one or more types. For example, the first tensor computation unit may be constructed by two different target types of basic computation unit. In this case, each target type has a corresponding target quantity. For example, if the target type includes basic computation units supporting fp4 and basic computation units supporting fp8, where a target quantity of the basic computation units supporting fp4 is 1 and a quantity of the basic computation units supporting fp8 is 1, a mixed-accuracy tensor computation module that supports computation of a tensor of fp4 and a tensor of fp 12 may be constructed by using one basic computation unit of fp4 and one basic computation unit of fp8.

Step 2022: Determining the first tensor computation unit based on the target quantity of basic computation units of the target type in the neural network processor.

After the target type and the target quantity of the basic computation units are determined, the target quantity of basic computation units of the target type in the neural network processor may be configured to determine the first tensor computation unit that can complete tensor computation between the first sensor and the second tensor.

In some optional embodiments, the first tensor computation unit may be determined by logically associating the target quantity of basic computation units of the target type. For example, computation arrays of two basic computation units that support symmetric tensor computation of int4 * int4 are connected in series, and computation of a tensor of in4 and a tensor of int8 is met through logic control. For another example, a large array supporting int8 * int8 is constructed by a computation array including four basic computation units that support symmetric tensor computation of int4 * int4, to serve as the first tensor computation unit. Each basic computation unit may include a multiply-add array with the preset bit width, used for multiplication of each element (that is, a feature value or a weight value) of the first tensor and each element (a feature value) of the second tensor, and for accumulation between a plurality of products. The multiply-add array may be implemented in any feasible manner, and details are not described herein.

In the embodiments, a high-accuracy or mixed-accuracy first tensor computation unit may be determined by a plurality of basic computation units that support the preset bit width. Thus, tensor computation with higher accuracy or mixed accuracy may be completed by using basic computation units with lower accuracy in the neural network processor. In this way, computational accuracy of the model may be improved at lower hardware costs.

In some optional embodiments, the preset bit width supported by the basic computation unit is less than or equal to both the first bit width and the second bit width.

In some optional embodiments, the first data format information includes the first bit width and the first data type of the first tensor, and the second data format information includes the second bit width and the second data type of the second tensor.

Step 2021 of determining a target type and a target quantity of basic computation units based on the first data format information and the second data format information may include:
determining the target type of the basic computation units based on a first data type of the first tensor and a second data type of the second tensor; and determining the target quantity of the basic computation units based on the first bit width of the first tensor, the second bit width of the second tensor, and a bit width supported by the basic computation units of the target type.

The target type is a data type that is supported by the basic computation unit and satisfies requirements of the first data type and the second data type. For example, if the first data type is int and the second data type is also int, data types of two input tensors supported by the basic computation unit need to be int. The target quantity may be determined based on proportional relationships between the first bit width and the second bit width and the preset bit width. For example, if the preset bit width is 4 bits * 4 bits, the first bit width is 4 bits, and the second bit width is 16 bits, the target quantity is (4/4) * (16/4)=4.

In some optional embodiments, when the neural network processor includes basic computation units with a plurality of bit widths, the target type may include data format types specifically supported by the basic computation unit, such as int4 * int4. In this case, the target type and the target quantity of the basic computation units may be determined based on the data type and the bit width of the first tensor and the data type and the bit width of the second tensor. First, the data type supported by the basic computation unit may be determined based on the first data type and the second data type. Subsequently, a basic computation unit that meets a condition for bit width is determined from the basic computation units that meet the data type, to obtain the target type of the basic computation unit. The condition for bit width may be set according to an actual situation of the mixed accuracy that can be configured for the basic computation unit. For example, the data format of the first tensor is int4, the data format of the second tensor is int16, and the basic computation units include types of int4 * in4 and int8 * int8. Currently, the basic computation units support tensor computation configured with mixed accuracy such as int4 * int8, int4 * int12, int4 * int16, and int8 * int16, and int8 * int32, and tensor computation configured with high accuracy such as int16 * int16. The mixed accuracy and high accuracy herein may be referred to as configurable accuracy, and types, quantities, and control manners of basic computation units corresponding to various configurable accuracy may be pre-configured. In this case, the data format of the first tensor and the data format of the second tensor may be matched with the configurable accuracy that currently can be configured, so as to find a configurable accuracy type that can meet a condition and obtain the target type and the target quantity of the basic computation units. Moreover, the target quantity of the basic computation units of the target type may be controlled according to a corresponding control manner to complete the computation of the first tensor and the second tensor.

In the embodiments, the target type and the target quantity of the basic computation units may be accurately determined based on the data formats of the first tensor and the second tensor and the data format supported by the basic computation unit, thereby providing accurate and effective basic computation units for implementing mixed-accuracy or high-accuracy tensor computation of the first tensor and the second tensor.

In some optional embodiments, as shown in FIG. 3, step 203 of controlling the first tensor computation unit to compute the first tensor and the second tensor to obtain a tensor computation result may include:
Step 2031: Controlling the target quantity of basic computation units of the target type to compute the first tensor and the second tensor to obtain the tensor computation result.

Configuration information respectively corresponding to various configurable accuracy may be pre-configured in the neural network processor, and the configuration information may include information about a control manner of constructing a tensor computation module by using a plurality of basic computation units. Therefore, after the target type and the target quantity of the basic computation units are determined, each basic computation unit may be controlled based on the corresponding configuration information to complete the computation of the first tensor and the second tensor, so as to obtain the tensor computation result.

In some optional embodiments, the control manner may include a storage address of input data of each basic computation unit, control of a working clock, a control instruction for the computation array, and caching of an intermediate computation result. For a data type with a sign bit, the control manner may also include configuration related to the sign bit. For example, when n int4 * int4 basic computation units are connected in series to form an int4 * int (4n) tensor computation module, sign bits representing n-1 low-bit basic computation units may be configured as non-sign bits, while sign bits of basic computation units at highest 4 bits are remained, thus accurately implementing mixed-accuracy tensor computation. Different data types may have different configuration information, which may be specifically set according to working conditions of the basic computation unit of different data types.

In the embodiments, a plurality of basic computation units may be controlled to complete the mixed-accuracy or high-accuracy tensor computation of the first tensor and the second tensor, so that tensor computation with a plurality of configurable accuracy can be implemented by using fewer types of basic computation units in the neural network processor. In this way, on one hand, utilization of the basic computation unit may be effectively improved; and on the other hand, the tensor computation with higher accuracy or mixed accuracy may be completed at lower hardware costs. This can ensure low-bit quantization of the weight data of the model, reduce a memory access bandwidth for the weight data, and also preserve high-bit feature data of the model, thereby satisfying requirements for the high dynamic range of the feature data, which helps to cover a wider range of scenarios.

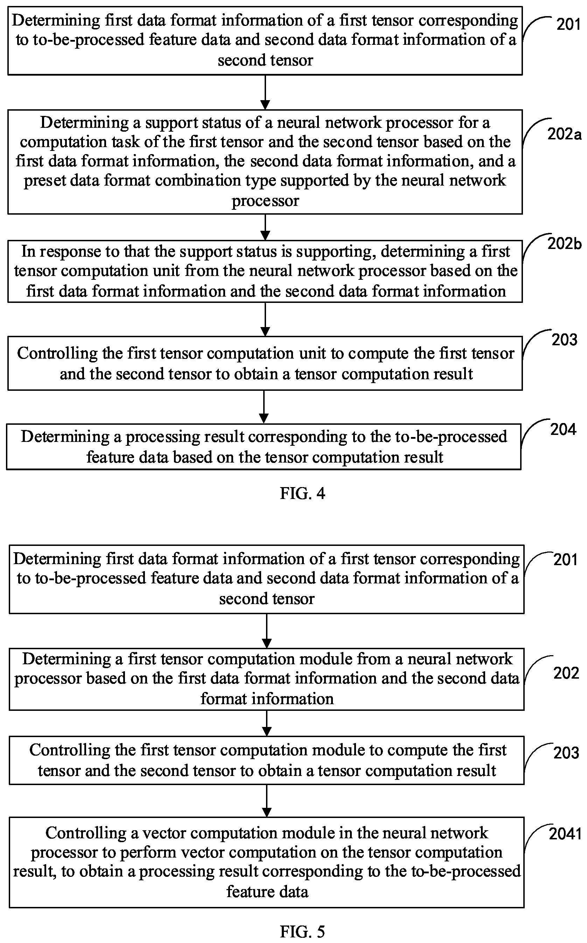

FIG. 4 is a schematic flowchart of a feature data processing method according to still another exemplary embodiment of this disclosure.

In some optional embodiments, as shown in FIG. 4, on the basis of the embodiments shown in FIG. 2, step 202 of determining a first tensor computation unit from a neural network processor based on the first data format information and the second data format may include the following steps.

Step 202a: Determining a support status of the neural network processor for a computation task of the first tensor and the second tensor based on the first data format information, the second data format information, and a preset data format combination type supported by the neural network processor.

The preset data format combination type supported by the neural network processor may include a plurality of configurable accuracy combinations (that is, configurable data format combinations), which may include a symmetric accuracy combination and an asymmetric accuracy combination. For example, the preset data format combination type includes int4 * int4, int4 * int8, int4 * int12, int4 * int16, int8 * int8, int8 * int16, int8 * int32, int16 * int16, and other combination types. The preset data format combination type may be specifically set according to configuration supported by the neural network processor. Different configurable accuracy combinations may have corresponding configuration information. The basic computation units are configured and controlled accordingly based on the configuration information, so that the plurality of basic computation units can be associated to determine the first tensor computation unit that satisfy the computational requirements of the first tensor and the second tensor. A matching rule may be set to match the first data format information and the second data format information with various preset data format combination types, so as to determine the support status of the neural network processor for the computation task of the first tensor and the second tensor. The support status may include two statuses: supporting and not supporting. If the first data format information and the second data format information fail to match the preset data format combination types, it may be determined that the support status is not supporting. If the match is successful, it may be determined that the support status is supporting.

In some optional embodiments, the current support status of the neural network processor for the computation task of the first tensor and the second tensor may also be determined by further combining a real-time use status of each basic computation unit in the neural network processor.

Step 202b: In response to that the support status is supporting, determining the first tensor computation unit from the neural network processor based on the first data format information and the second data format information.

If it is determined that the support status is supporting, the corresponding basic computation unit may be determined from the neural network processor based on a target preset data format combination type matching the first data format information and the second data format information, to determine the first tensor computation unit. For the manner of determining the first tensor computation unit by using the basic computation units and a control manner, reference may be made to the foregoing embodiments.

In the embodiments, the support status of the neural network processor for the computation of the first tensor and the second tensor is first determined, and then subsequent processing steps are performed when it is determined that the support status is supporting. If the support status is not supporting, prompt information about not supporting may be directly fed back to end the process, thereby reducing unnecessary processing and improving processing efficiency.

FIG. 5 is a schematic flowchart of a feature data processing method according to yet another exemplary embodiment of this disclosure.

In some optional embodiments, as shown in FIG. 5, on the basis of the embodiments shown in FIG. 2, step 204 of determining a processing result corresponding to the to-be-processed feature data based on the tensor computation result may include:
Step 2041: Controlling a vector computation module in the neural network processor to perform vector computation on the tensor computation result, to obtain the processing result corresponding to the to-be-processed feature data.

The vector computation module is a high-accuracy vector computation module that meets accuracy of the tensor computation result, and may be determined based on subsequent processing of the tensor computation result of to-be-processed feature data. For example, vector operations such as a softmax operation and an addition operation for corresponding elements are performed on the tensor computation result, which is not specifically limited.

In the embodiments, an entire processing flow of the to-be-processed feature data is completed based on the vector computation for performing post-processing on the tensor computation result, to obtain the processing result corresponding to the to-be-processed feature data. In this case, high-accuracy vector computation is implemented, so that it may be ensured that the processing result of the to-be-processed feature data has high accuracy.

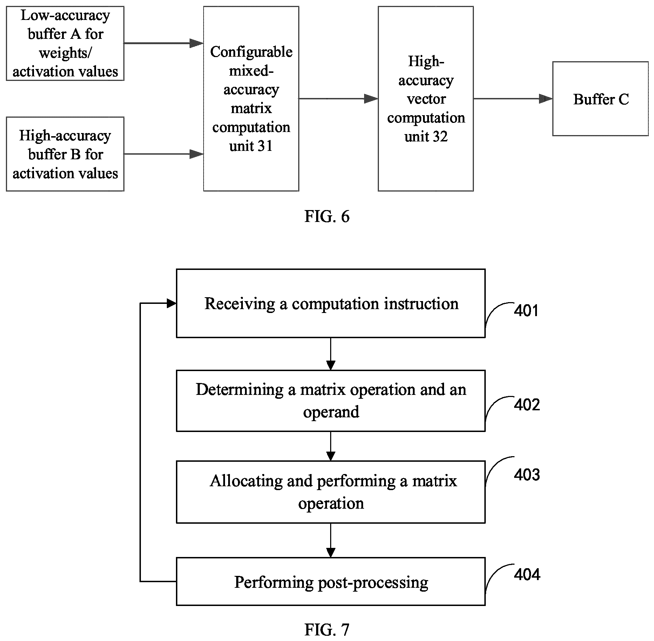

In some optional embodiments, FIG. 6 is a block diagram of a structure of a neural network processor according to an exemplary embodiment of this disclosure. As shown in FIG. 6, tensor computation being matrix computation is used as an example, a neural network processor 12 may include a low-accuracy buffer A for weights/ activation values, a high-accuracy buffer B for activation values, a configurable mixed-accuracy matrix computation unit 31, a high-accuracy vector computation unit 32, and a buffer C. The buffer A is configured to cache low-accuracy weights or activation values (may be referred to as a first matrix or a left matrix), and the buffer B is configured to cache high-accuracy activation values (may be referred to as a second matrix or a right matrix). The configurable mixed-accuracy matrix computation unit 31 may include a plurality of configurable basic computation units for performing various types of mixed-accuracy matrix computation. The high-accuracy vector computation unit 32 (that is, the vector computation module described above) may be configured to perform high-accuracy vector computation on the matrix computation result, and an output result of the high-accuracy vector computation unit 32 is cached in the buffer C. The buffers A, B, and C are configurable storage caches, which may be configured to satisfy storage requirements of corresponding data formats based on mixed-accuracy or high-accuracy computational requirements. For example, the buffer A may support configurable storage caches of int4 and int8. The buffer B may support configurable storage caches of int4, int8, and int16. A specific configurable data type that can be supported may be set according to computation with configurable accuracy that is supported by the neural network processor 12. In practical application, a specific structure of the neural network processor 12 is not limited to the structure shown in FIG. 6.

In some optional embodiments, FIG. 7 is a block diagram of a processing flow of a neural network processor according to an exemplary embodiment of this disclosure. As shown in FIG. 7, on the basis of the neural network processor shown in FIG. 6, the processing flow of the neural network processor may include the following steps.

Step 401: Receiving a computation instruction. The computation instruction may be received and obtained from a CPU, and instructs the neural network processor to perform corresponding computation.

Step 402: Determining a matrix operation and an operand. The matrix operation may include a matrix multiplication operation, a matrix addition operation, or a matrix multiply-add operation. The operand may be input data for a computation unit to perform a matrix operation, such as a weight or an activation value. Specifically, the neural network processor may write the operand into the corresponding buffer (such as the buffer A or B) to be input into a corresponding matrix computation unit, such as the configurable mixed-accuracy matrix computation unit 31.

Step 403: Allocating and performing a matrix operation. The operand is allocated to the corresponding matrix computation unit for matrix computation, to obtain a matrix computation result.

Step 404: Performing post-processing. High-accuracy vector computation and other post-processing are performed on the matrix computation result in step 403, and an obtained processing result is cached in the buffer C.

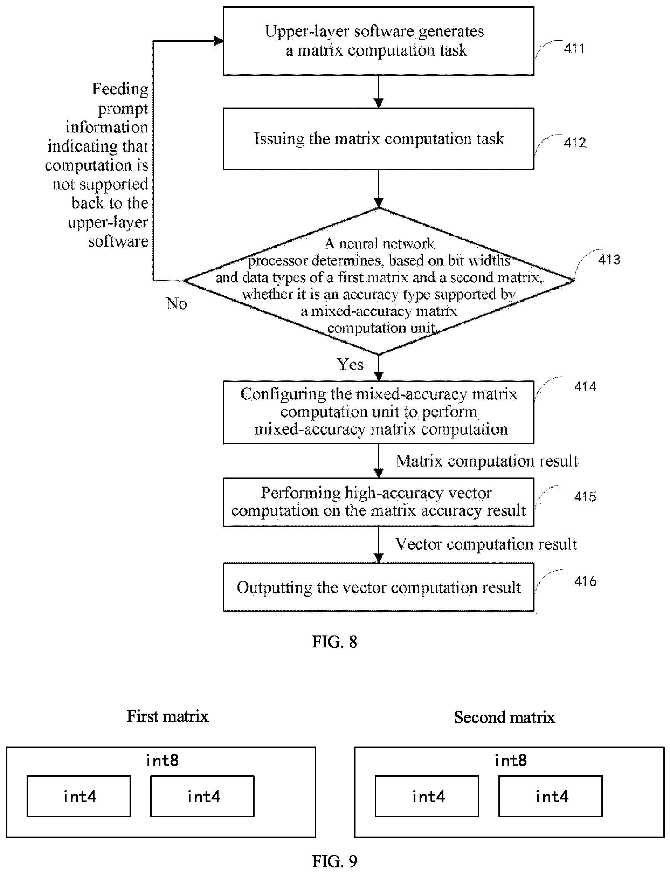

In some optional embodiments, FIG. 8 is a block diagram of a flow of processing feature data according to an exemplary embodiment of this disclosure. As shown in FIG. 8, the block diagram of the flow of processing the feature data may include the following steps.

Step 411: Upper-layer software generates a matrix computation task. The upper-layer software may be a compiled model instruction sequence that corresponds to the neural network model and is executed by the CPU.

Step 412: Issuing the matrix computation task. The matrix computation task may include relevant information about the first matrix and the second matrix (such as a storage address and data format information of a matrix) and specific computation related information (such as matrix multiplication, matrix addition, matrix multiply-add, and other information). The data format information includes a bit width and a data type of the matrix.

Step 413: A neural network processor determines, based on bit widths and data types of a first matrix and a second matrix that are used for matrix computation, whether it is an accuracy type supported by a mixed-accuracy matrix computation unit (that is, a type with configured accuracy). If yes, step 414 is performed. If not, prompt information indicating that the computation is not supported is fed back to the upper-layer software.

Step 414: Configuring the mixed-accuracy matrix computation unit to perform mixed-accuracy matrix computation, to obtain a matrix computation result (that is, a tensor computation result).

Step 415: Performing high-accuracy vector computation on the matrix accuracy result to obtain a vector computation result (that is, the processing result corresponding to the to-be-processed feature data).

### Step 416: Outputting the vector computation result.

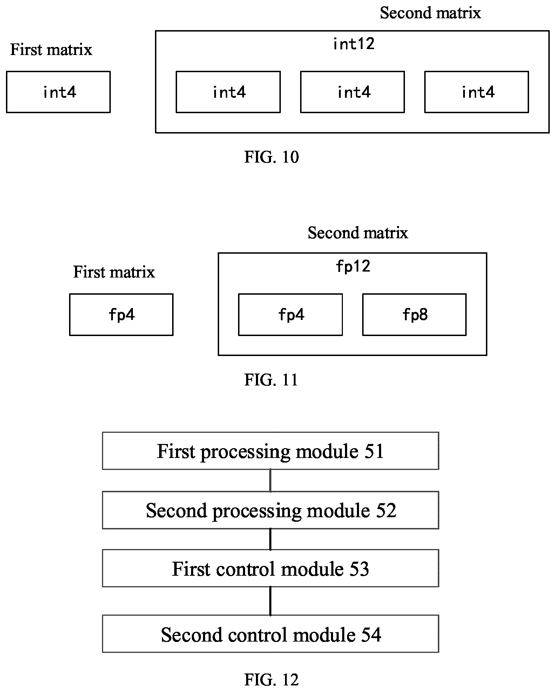

In some optional embodiments, FIG. 9 is a schematic diagram of configurable mixed types of a first tensor and a second tensor according to an exemplary embodiment of this disclosure. As shown in FIG. 9, the first tensor is the first matrix, with a data format of int8, which may be composed of two int4. To be specific, the buffer A may support configurable caching of int4 and int8. The second tensor is the second matrix, with a data format of int8. To be specific, the buffer B may support configurable caching of int4 and int8. The tensor computation of the first matrix and the second matrix may be composed of four basic computation units that support symmetric tensor computation of int4. FIG. 10 is a schematic diagram of configurable mixed types of a first tensor and a second tensor according to another exemplary embodiment of this disclosure. As shown in FIG. 10, the first matrix is of int4, and the second matrix is of int12, wherein int12 may be represented by using three int4. To be specific, the buffer B may support configurable caching of int4, int8, and int12. The matrix computation of the first matrix and the second matrix may be implemented by using three basic computation units that support int4. FIG. 11 is a schematic diagram of configurable mixed types of a first tensor and a second tensor according to still another exemplary embodiment of this disclosure. As shown in FIG. 11, the first matrix is of fp4, and the second matrix is of fp12, wherein fp12 may be represented by one fp4 and one fp8. In addition, fp12 may also be represented by three fp4. In practical application, the configurable mixed types of the first tensor and the second tensor are not limited to the foregoing types.

According to the method in the embodiments of this disclosure, the computation unit of the neural network processor may be set to support tensor computation with configurable mixed accuracy while the hardware computation unit is improved at low costs. For optimization of a large model, mixed-accuracy matrix computation is supported, so that a memory access bottleneck and a computational bottleneck of the large model can be optimized in a computation process on a terminal side. For example, matrix computation of int4 may be configured to matrix computation that supports int4 * int12, where a computation unit has minimal increases in hardware costs and a chip area occupied thereby. Moreover, according to the method in the embodiments of this disclosure, as matrix computation with configurable mixed accuracy can be implemented, this method may be applied to algorithm models of different scales and scenarios (such as a large-scale language model), helping to optimize memory access and computation.

The foregoing embodiments of this disclosure may be implemented separately or in any combination without conflict. This may be specifically set according to actual requirements, and is not limited in this disclosure.

Any feature data processing method provided in the embodiments of this disclosure may be implemented by any suitable device with a data processing capability, including but not limited to a terminal device and a server. Alternatively, any feature data processing method provided in the embodiments of this disclosure may be implemented by a processor. For example, the processor implements any feature data processing method described in the embodiments of this disclosure by invoking corresponding instructions stored in the memory. Details are not described below.

### Exemplary apparatus

FIG. 12 is a schematic diagram of a structure of a feature data processing apparatus according to an exemplary embodiment of this disclosure. The apparatus in this embodiment may be configured to implement the corresponding method embodiments of this disclosure. The apparatus shown in FIG. 12 includes a first processing module 51, a second processing module 52, a first control module 53, and a second control module 54.

The first processing module 51 is configured to determine first data format information of a first tensor corresponding to to-be-processed feature data and second data format information of a second tensor.

The first data format information may include a first bit width of the first tensor. The second data format information may include a second bit width of the second tensor.

The second processing module 52 is configured to determine a first tensor computation unit from a neural network processor based on the first data format information and the second data format information.

The first tensor computation unit may include at least one basic computation unit, which may support tensor computation with a preset bit width.

The first control module 53 is configured to control the first tensor computation unit to compute the first tensor and the second tensor to obtain a tensor computation result.

The second control module 54 is configured to determine a processing result corresponding to the to-be-processed feature data based on the tensor computation result.

In some optional embodiments, the first tensor is first feature data in the to-be-processed feature data, and the second tensor is weight data corresponding to the first feature data.

In some optional embodiments, the first tensor is first feature data in the to-be-processed feature data, and the second tensor is second feature data in the to-be-processed feature data.

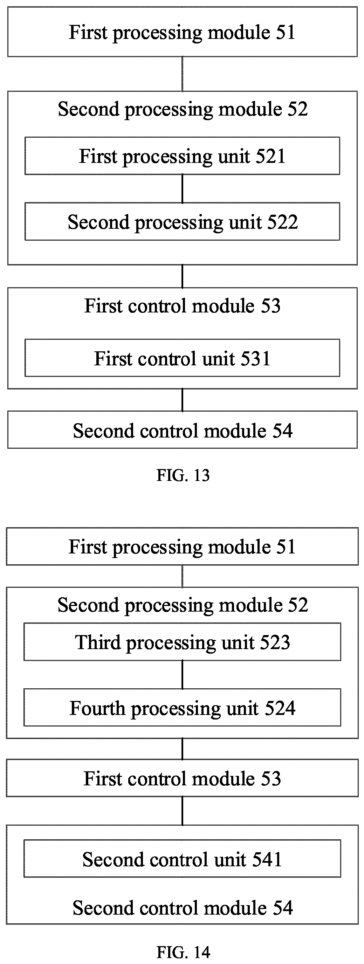

FIG. 13 is a schematic diagram of a structure of a feature data processing apparatus according to another exemplary embodiment of this disclosure.

In some optional embodiments, as shown in FIG. 13, the second processing module 52 may include a first processing unit 521 and a second processing unit 522.

The first processing unit 521 may be configured to determine a target type and a target quantity of basic computation units based on the first data format information and the second data format information.

The basic computation unit is a computation unit in the neural network processor that supports tensor computation with the preset bit width.

The second processing unit 522 may be configured to determine the first tensor computation unit based on the target quantity of basic computation units of the target type in the neural network processor.

In some optional embodiments, the preset bit width is less than or equal to both the first bit width and the second bit width.

In some optional embodiments, the first data format information includes the first bit width and a first data type of the first tensor, and the second data format information includes the second bit width and a second data type of the second tensor.

The first processing unit 521 may be specifically configured to determine the target type of the basic computation units based on the first data type of the first tensor and the second data type of the second tensor; and determine the target quantity of the basic computation units based on the first bit width of the first tensor, the second bit width of the second tensor, and a bit width supported by the basic computation units of the target type.

In some optional embodiments, as shown in FIG. 13, the first control module 53 may include:
a first control unit 531, configured to control the target quantity of basic computation units of the target type to compute the first tensor and the second tensor to obtain the tensor computation result.

FIG. 14 is a schematic diagram of a structure of a feature data processing apparatus according to still another exemplary embodiment of this disclosure.

In some optional embodiments, as shown in FIG. 14, the second processing module 52 may include a third processing unit 523 and a fourth processing unit 524.

The third processing unit 523 may be configured to determine a support status of the neural network processor for a computation task of the first tensor and the second tensor based on the first data format information, the second data format information, and a preset data format combination type supported by the neural network processor.

The fourth processing unit 524 may be configured to determine, in response to that the support status is supporting, the first tensor computation unit from the neural network processor based on the first data format information and the second data format information.

In some optional embodiments, the fourth processing unit 524 may include the first processing unit 521 and the second processing unit 522 that are described above.

In some optional embodiments, as shown in FIG. 14, on the basis of the embodiments shown in FIG. 12, the second control module 54 may include: a second control unit 541, which may be configured to control a vector computation module in the neural network processor to perform vector computation on the tensor computation result, to obtain the processing result corresponding to the to-be-processed feature data.

For beneficial technical effects corresponding to the exemplary embodiments of this apparatus, reference may be made to the corresponding beneficial technical effects in the section of exemplary method described above, and details are not described herein again.

### Exemplary electronic device

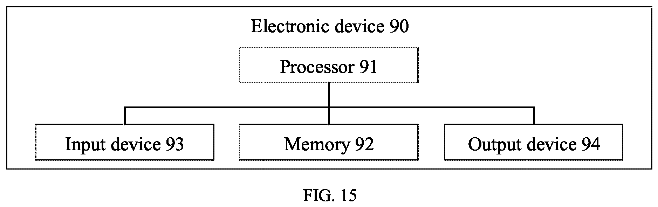

FIG. 15 is a diagram of a structure of an electronic device according to an embodiment of this disclosure. The electronic device includes at least one processor 91 and a memory 92.

The processor 91 may be a central processing unit (CPU) or another form of processing unit having a data processing capability and/or an instruction execution capability, and may control other components in the electronic device 90 to implement desired functions.

The memory 92 may include one or more computer program products, which may include various forms of computer readable storage media, such as a volatile memory and/or a non-volatile memory. The volatile memory may include, for example, a random access memory (RAM) and/or a cache. The nonvolatile memory may include, for example, a read-only memory (ROM), a hard disk, and a flash memory. One or more computer program instructions may be stored on the computer readable storage medium. The processor 91 may execute the one or more program instructions to implement the method according to the various embodiments of this disclosure that are described above and/or other desired functions.

In an example, the electronic device 90 may further include an input device 93 and an output device 94. These components are connected to each other through a bus system and/or another form of connection mechanism (not shown).

The input device 93 may further include, for example, a keyboard and a mouse.

The output device 94 may output various information to the outside, and may include, for example, a display, a speaker, a printer, a communication network, and a remote output device connected to the communication network.

Certainly, for simplicity, FIG. 15 shows only some of components in the electronic device 90 that are related to this disclosure, and components such as a bus and an input/output interface are omitted. In addition, according to specific application situations, the electronic device 90 may further include any other appropriate components.

### Exemplary computer program product and computer readable storage medium

In addition to the foregoing method and device, embodiments of this disclosure may also provide a computer program product, which includes computer program instructions. When the computer program instructions are executed by a processor, the processor is enabled to perform the steps, of the method according to the embodiments of this disclosure, that are described in the "Exemplary method" section described above.

The computer program product may be program code, written with one or any combination of a plurality of programming languages, that is configured to perform the operations in the embodiments of this disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of this disclosure may further relate to a computer readable storage medium, which stores computer program instructions. When the computer program instructions are run by the processor, the processor is enabled to perform the steps, of the method according to the embodiments of this disclosure, that are described in the "Exemplary method" section described above.

The computer readable storage medium may be one readable medium or any combination of a plurality of readable media. The readable medium may be a readable signal medium or a readable storage medium. The readable storage medium includes, for example but is not limited to electricity, magnetism, light, electromagnetism, infrared ray, or a semiconductor system, an apparatus, or a device, or any combination of the above. More specific examples (a non-exhaustive list) of the readable storage medium include: an electrical connection with one or more conducting wires, a portable disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

Basic principles of this disclosure are described above in combination with specific embodiments. However, advantages, superiorities, and effects mentioned in this disclosure are merely examples but are not for limitation, and it cannot be considered that these advantages, superiorities, and effects are necessary for each embodiment of this disclosure. In addition, specific details described above are merely for examples and for ease of understanding, rather than limitations. The details described above do not limit that this disclosure must be implemented by using the foregoing specific details.

A person skilled in the art may make various modifications and variations to this disclosure without departing from the spirit and the scope of this application. In this way, if these modifications and variations of this application fall within the scope of the claims and equivalent technologies of the claims of this disclosure, this disclosure also intends to include these modifications and variations.

## Claims

1. A feature data processing method, **characterized in that** the feature data processing method comprises:
determining (201) first data format information of a first tensor corresponding to to-be-processed feature data and second data format information of a second tensor, wherein the first data format information comprises a first bit width of the first tensor and the second data format information comprises a second bit width of the second tensor;
determining (202) a first tensor computation unit from a neural network processor based on the first data format information and the second data format information, wherein the first tensor computation unit comprises at least one basic computation unit that supports tensor computation with a preset bit width;
controlling (203) the first tensor computation unit to compute the first tensor and the second tensor to obtain a tensor computation result; and
determining (204) a processing result corresponding to the to-be-processed feature data based on the tensor computation result.

2. The method according to claim 1, wherein the determining (202) a first tensor computation unit from a neural network processor based on the first data format information and the second data format information comprises:
determining (2021) a target type and a target quantity of basic computation units based on the first data format information and the second data format information; and
determining (2022) the first tensor computation unit based on the target quantity of basic computation units of the target type in the neural network processor.

3. The method according to claim 2, wherein the preset bit width is less than or equal to both the first bit width and the second bit width; and
wherein the determining (2021) a target type and a target quantity of basic computation units based on the first data format information and the second data format information comprises:
determining the target type of the basic computation units based on a first data type of the first tensor and a second data type of the second tensor; and
determining the target quantity of the basic computation units based on the first bit width of the first tensor, the second bit width of the second tensor, and a bit width supported by the basic computation units of the target type.

4. The method according to claim 2, wherein the controlling (203) the first tensor computation unit to compute the first tensor and the second tensor to obtain a tensor computation result comprises:
controlling (2031) the target quantity of basic computation units of the target type to compute the first tensor and the second tensor to obtain the tensor computation result.

5. The method according to any one of claims 1 to 4, wherein the determining (202) a first tensor computation unit from a neural network processor based on the first data format information and the second data format information comprises:
determining (202a) a support status of the neural network processor for a computation task of the first tensor and the second tensor based on the first data format information, the second data format information, and a preset data format combination type supported by the neural network processor; and
in response to that the support status is supporting, determining (202b) the first tensor computation unit from the neural network processor based on the first data format information and the second data format information.

6. The method according to any one of claims 1 to 4, wherein the first tensor is first feature data in the to-be-processed feature data, and the second tensor is weight data corresponding to the first feature data.

7. The method according to any one of claims 1 to 4, wherein the first tensor is first feature data in the to-be-processed feature data, and the second tensor is second feature data in the to-be-processed feature data.

8. The method according to any one of claims 1 to 4, wherein the determining (204) a processing result corresponding to the to-be-processed feature data based on the tensor computation result comprises:
controlling (2041) a vector computation module in the neural network processor to perform vector computation on the tensor computation result, to obtain the processing result corresponding to the to-be-processed feature data.

9. A feature data processing apparatus, **characterized in that** the feature data processing apparatus comprises:
a first processing module (51), configured to determine first data format information of a first tensor corresponding to to-be-processed feature data and second data format information of a second tensor, wherein the first data format information comprises a first bit width of the first tensor and the second data format information comprises a second bit width of the second tensor;
a second processing module (52), configured to determine a first tensor computation unit from a neural network processor based on the first data format information and the second data format information, wherein the first tensor computation unit comprises at least one basic computation unit that supports tensor computation with a preset bit width;
a first control module (53), configured to control the first tensor computation unit to compute the first tensor and the second tensor to obtain a tensor computation result; and
a second control module (54), configured to determine a processing result corresponding to the to-be-processed feature data based on the tensor computation result.

10. The feature data processing apparatus according to claim 9, wherein the second processing module (52) comprises:
a first processing unit (521), configured to determine a target type and a target quantity of basic computation units based on the first data format information and the second data format information; and
a second processing unit (522), configured to determine the first tensor computation unit based on the target quantity of basic computation units of the target type in the neural network processor.

11. The feature data processing apparatus according to claim 9, wherein the first control module (53) comprises:
a first control unit (531), configured to control the target quantity of basic computation units of the target type to compute the first tensor and the second tensor to obtain the tensor computation result.

12. The feature data processing apparatus according to claim 9, wherein the second processing module (52) comprises:
a third processing unit (523), configured to determine a support status of the neural network processor for a computation task of the first tensor and the second tensor based on the first data format information, the second data format information, and a preset data format combination type supported by the neural network processor; and
a fourth processing unit (524), configured to determine, in response to that the support status is supporting, the first tensor computation unit from the neural network processor based on the first data format information and the second data format information.

13. The feature data processing apparatus according to claim 9, wherein the second control module (54) comprises:
a second control unit (541), configured to control a vector computation module in the neural network processor to perform vector computation on the tensor computation result, to obtain the processing result corresponding to the to-be-processed feature data.

14. A computer readable storage medium, storing a computer program, which, when executed by a processor, cause the processor to implement the method according to any one of claims 1 to 8.

15. An electronic device (90), **characterized in that** the electronic device comprises:
a processor (91); and
a memory (92), configured to store processor-executable instructions, wherein
the processor (91) is configured to read the executable instructions from the memory (92), and execute the instructions to implement the method according to any one of claims 1 to 8.
